# EUROPEAN PATENT APPLICATION

(11) **EP 3 343 005 A1**
(43) Date of publication of application: **04.07.2018**
(21) Application number: 17380001.2
(22) Date of filing: 03.01.2017
(51) Int. Cl.: F02D 29/06, F02D 41/00, F02D 41/14, F02D 41/02

(54) **METHOD FOR CONTROLLING AN ENGINE IN TRANSIENT CONDITIONS**

(71) Applicant: Grupo Guascor, S.L. Unipersonal, ES-01510 Miñano, Alava (ES)
(72) Inventor: DEL Valle Echavarri, Javier, 01008 Vitoria, Alava (ES)
(74) Representative: Isarpatent

(57) **Abstract**

A method for delivering a fuel mixture to an engine system is provided. The method may include connecting a control system to an actuator configured to selectively open a control valve to add fuel to the engine system via a fuel line. The fuel may be mixed with air to produce the fuel mixture. The power of an engine of the engine system may be measured via the control system, and a derivative of the measured power may be calculated via the control system. The derivative of the measured power may be compared with a plurality of thresholds via the control system, and an amount of fuel to add or remove from the engine system may be determined based on the comparison. The fuel provided to the engine system may be altered via the control system based on the determined amount of fuel to add or remove.

## Description

### Background

Engines may be used to power generators, which may be used in a variety of applications such as continuous-use applications, stand-by applications, or prime power applications. Each of these types of applications may require a different electricity output by the generator, which in turn may require a different power output to be produced by the engine. Each of these types of applications may also require a different response time for an engine. Despite the potential different power needs, it is desirable for engines to be efficient and to produce a low amount of nitrogen oxide (NOₓ) emissions.

In order to reduce harmful emissions and maintain the efficiency of an engine, air and fuel mixing control systems are often used to maximize the air to fuel ratio ("AFR") entering into an inlet manifold of an engine given transient conditions. When engines are working in highly transient conditions, such as providing power to island generators, maximizing the AFR and controlling the harmful emissions may be difficult, and engines may experience surge as engines experience over speed and under speeds due to too much or too little fuel delivered to the engine in a timely manner. In particular, island generators may frequently start and stop, which means engines may frequently operate between load acceptance and load rejection conditions. Air and fuel mixing control systems may have difficulty properly adjusting fuel in the highly transient conditions.

What is needed, then, is an improved control system for delivering a fuel mixture to an engine.

### Summary

Embodiments of the disclosure may provide a method for delivering a fuel mixture to an engine system. The method may include connecting a control system to an actuator configured to selectively open a control valve to add fuel to the engine system via a fuel line. The method may also include adding fuel into the engine system via the control system at a fuel rate, mixing the fuel with air to produce a fuel mixture, and measuring a power of an engine of the engine system via the control system. The method may further include calculating a derivative of the measured power via the control system and comparing the derivative of the measured power via the control system. The method may also include determining an additional amount of fuel to add if the derivative of the measured power is greater than a positive rate threshold, and increasing the fuel added to the engine system via the control system based on the determined additional amount of fuel.

Embodiments of the disclosure may further provide a method for delivering a fuel mixture to an engine system. The method may include connecting a control system to an actuator configured to selectively open a control valve to add fuel to the engine system via a fuel line. The method may also include adding fuel into the engine system via the control system at a fuel rate, mixing the fuel with air to produce a fuel mixture, and measuring a power of an engine of the engine system via the control system. The method may further include calculating a derivative of the measured power via the control system and comparing the derivative of the measured power with a plurality of thresholds via the control system. The method may also include determining an amount of fuel to add or remove from the engine system based on the comparison of the derivative of the measured power with the plurality of thresholds, and altering the fuel added to the engine system via the control system based on the determined amount of fuel to add or remove.

Embodiments of the disclosure may further provide a method for delivering a fuel mixture to an engine. The method may include combining fuel with air in a mixer to produce the fuel mixture, where an actuator regulates a valve to selectively add the fuel into the mixer, and a control system is operatively connected to the actuator to determine the fuel to be added. The method may also include determining a modified amount of fuel to be added to or removed from the amount of fuel by the control system. The control system may determine the modified amount of fuel by measuring a power of the engine, calculating a derivative of the measured power,
determining a multiplier based on the measured power and the derivative of the measured power, and calculating the modified amount of fuel by multiplying the amount of fuel by the multiplier. The method may further include adding or removing the modified amount of fuel from the amount of fuel for a temporary duration as determined by the control system, compressing the fuel mixture in a compressor, and receiving the compressed fuel mixture into the engine.

### Brief Description of the Drawings

The present disclosure is best understood from the following detailed description when read with the accompanying Figures. It is emphasized that, in accordance with the standard practice in the industry, various features are not drawn to scale. In fact, the dimensions of the various features may be arbitrarily increased or reduced for clarity of discussion.
Figure 1 illustrates a block diagram of a control system for use with an engine system, according to one or more embodiments.
Figure 2 illustrates a schematic of an engine system operatively coupled with a generator, according to one or more embodiments.
Figure 3 illustrates a graphic user interface ("GUI") of a control system in a transient mode, according to one or more embodiments.
Figure 4 illustrates a flowchart of a method for controlling an engine system in the transient mode as shown in Figure 3, according to one or more embodiments disclosed.
Figure 5 illustrates a GUI of a control system in a boost transient mode, according to one or more embodiments.
Figure 6 illustrates a flowchart of a method for controlling an engine system in a boost transient mode as shown in Figure 5, according to one or more embodiments disclosed.

### Detailed Description

It is to be understood that the following disclosure describes several exemplary embodiments for implementing different features, structures, or functions of the invention. Exemplary embodiments of components, arrangements, and configurations are described below to simplify the present disclosure; however, these exemplary embodiments are provided merely as examples and are not intended to limit the scope of the invention. Additionally, the present disclosure may repeat reference numerals and/or letters in the various exemplary embodiments and across the Figures provided herein. This repetition is for the purpose of simplicity and clarity and does not in itself dictate a relationship between the various exemplary embodiments and/or configurations discussed in the various Figures. Moreover, the formation of a first feature over or on a second feature in the description that follows may include embodiments in which the first and second features are formed in direct contact, and may also include embodiments in which additional features may be formed interposing the first and second features, such that the first and second features may not be in direct contact. Finally, the exemplary embodiments presented below may be combined in any combination of ways, *i.e.,* any element from one exemplary embodiment may be used in any other exemplary embodiment, without departing from the scope of the disclosure.

Additionally, certain terms are used throughout the following description and claims to refer to particular components. As one skilled in the art will appreciate, various entities may refer to the same component by different names, and as such, the naming convention for the elements described herein is not intended to limit the scope of the invention, unless otherwise specifically defined herein. Further, the naming convention used herein is not intended to distinguish between components that differ in name but not function. Additionally, in the following discussion and in the claims, the terms "including" and "comprising" are used in an open-ended fashion, and thus should be interpreted to mean "including, but not limited to." All numerical values in this disclosure may be exact or approximate values unless otherwise specifically stated. Accordingly, various embodiments of the disclosure may deviate from the numbers, values, and ranges disclosed herein without departing from the intended scope. Furthermore, as it is used in the claims or specification, the term "or" is intended to encompass both exclusive and inclusive cases, *i*.*e*., "A or B" is intended to be synonymous with "at least one of A and B," unless otherwise expressly specified herein.

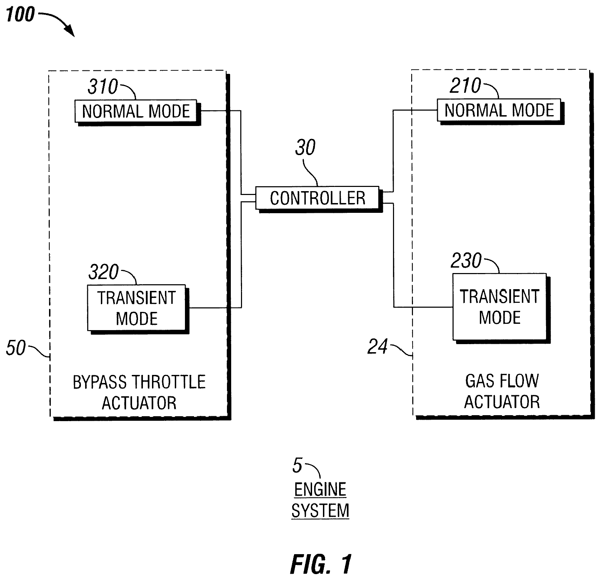

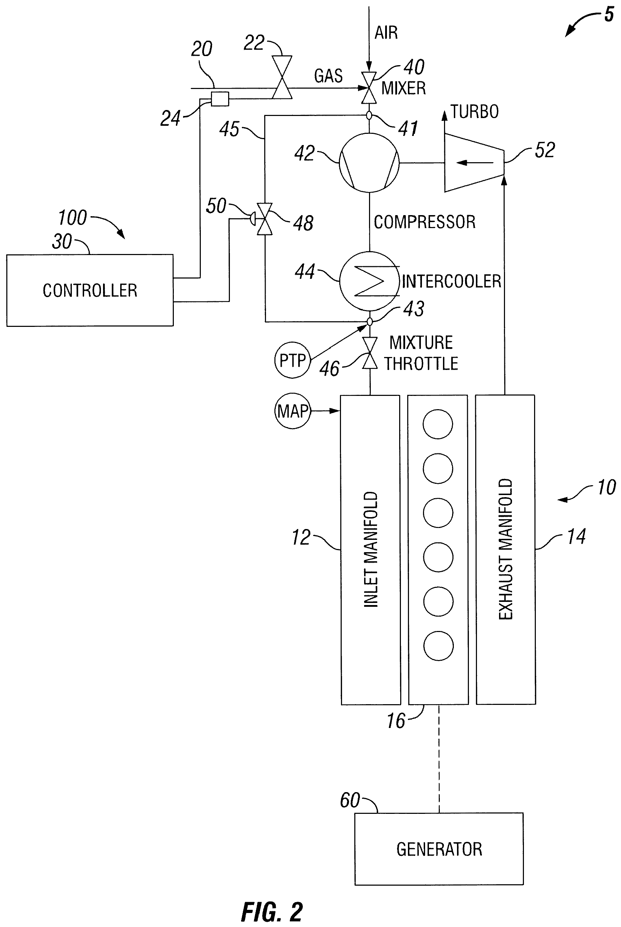

Figure 1 illustrates a block diagram of a control system 100 for use with an engine system 5, which is described in more detail in Figure 2, according to one or more embodiments disclosed. The engine system 5 may be operatively connected to a generator 60, as shown in Figure 2. The control system 100 may be operatively connected to the engine system 5 and configured to receive, analyze, and send information about various operating conditions and components of the engine system 5. In one embodiment, the control system 100 may include a controller 30 that receives, analyzes, and transmits information relative to an operation of a gas flow actuator 24, which regulates an amount of fuel that enters the engine system 5 by opening or closing a control valve 22. The control system 100 may include a plurality of operating modes to regulate the amount of fuel that enters the engine system 5 in order to avoid engine surge.

When the engine system 5 is operating under normal transient operating conditions, the controller 30 may operate in a normal mode 210 with respect to the gas flow actuator 24. In the normal mode 210, the engine system 5 may operate at a generally steady state, where the fuel supplied to the engine system may be generally static. In one embodiment, when the engine system 5 is operating under fast transient conditions, the controller 30 may operate in a transient mode 230 with respect to the gas flow actuator 24. In the transient mode 230, the controller 30 may rapidly adjust gas flow to the engine system 5 via the gas flow actuator 24 on a continuous basis. In the transient mode 230, extra fuel may be added to the engine system 5 for a short duration, or extra fuel may be removed from the engine system 5 for a short duration.

In one embodiment, the controller 30 may receive, analyze, and transmit information relative to operation of a bypass throttle actuator 50, which regulates the opening and closing of a mixture throttle valve 46 (as shown in Fig. 2). When the engine system 5 is operating under normal average-transient operating conditions, the controller 30 may operate in the normal mode 210 with respect to the bypass throttle actuator 50. In the normal mode 210, the bypass throttle actuator 50 may not be actuated. In one embodiment, when the engine system 5 is operating under transient conditions, the controller 30 may operate in the transient mode 230 with respect to the bypass throttle actuator 50. In the transient mode 230, the controller 30 may be needed to rapidly actuate the bypass throttle actuator 50 to open and close the mixture throttle valve 46 for a short duration. Each of the operating modes of the control system 100 with respect to the gas flow actuator 24 and the bypass throttle actuator 50 will be discussed in more detail herein.

Figure 2 illustrates the engine system 5 that is operatively coupled with the generator 60, according to one or more embodiments. The engine system 5 may include an engine 10, which may include an inlet manifold 12, an exhaust manifold 14, and a combustion chamber 16 positioned therebetween. The inlet manifold 12 of the engine 10 may receive a fuel mixture, which the combustion chamber 16 of the engine 10 combusts to produce useful mechanical energy, such as shaft rotation. Exhaust products from combustion within the engine 10 may exit from the exhaust manifold 14 and enter into a turbocharger 52.

The fuel mixture supplied to the engine system 5 may include a fuel, such as natural gas, biogas, landfill gas, -syngas or ethanol. The fuel mixture may also include an additional fluid, such as air. The fuel and the air may be mixed together in a mixer 40, which in one embodiment, may include a nozzle, and which is positioned upstream of the engine 10. After mixing, the fuel mixture may flow into a compressor 42, which may be fluidly connected to and downstream from the mixer 40. The compressor 42 may be configured to compress the fuel mixture. A cooler 44, which may be positioned downstream of the compressor 42 and fluidly coupled thereto, may further cool the compressed fuel mixture. The mixture throttle valve 46 may be positioned downstream of the cooler 44 and the compressor 42, and upstream of the intake manifold 12 of the engine 10. The mixture throttle valve 46 may control the rate of the fuel mixture entering into the intake manifold 12. In one embodiment, a bypass line 45 may extend from a first point 41 downstream of the mixer 40 to a second point 43 downstream of the cooler 44 and upstream of the mixture throttle valve 42. A bypass throttle valve 48 may be connected to the bypass line 45 and configured to selectively direct the fuel mixture away from the compressor 42 and cooler 44.

A fuel line 20 may be configured to supply the fuel to the engine system 5 and may be fluidly connected to the control valve 22. The control valve 22 may be connected to the gas flow actuator 24. The gas flow actuator 24 may be configured to open and close the control valve 22. The gas flow actuator 24 may be further connected to the control system 100 that actuates the gas flow actuator 24. The control system 100 may be operatively connected to a computer (not shown) and the control system 100 may include firmware that may collect and analyze data received from a plurality of sensors positioned on or near the engine system 100. The computer may include an external display and input devices such as a keyboard and mouse that may be configured to allow a user to manually adjust settings within the firmware of the control system 100 via one or more graphical user interfaces ("GUIs") that appear on the external display.

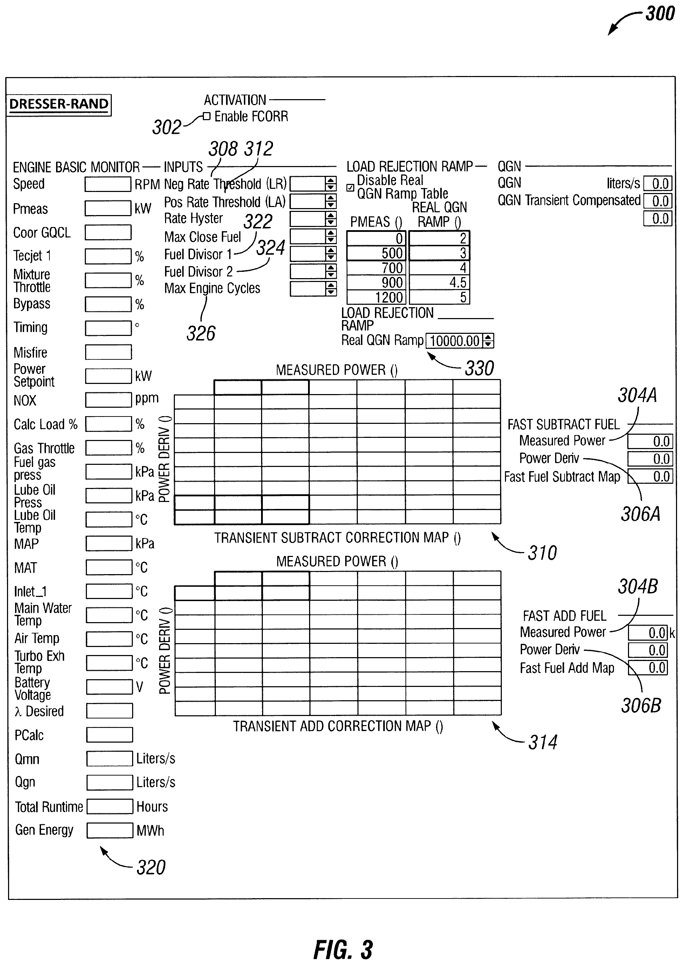

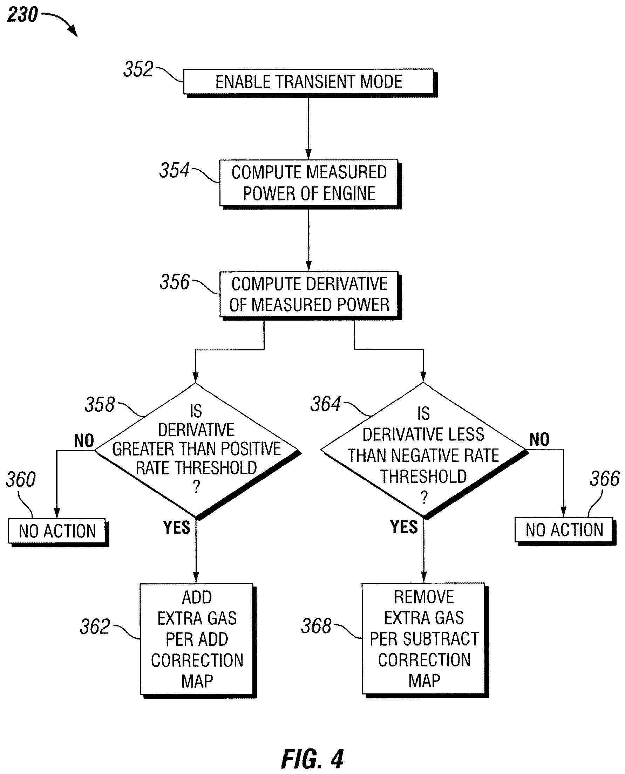

Figure 3 illustrates a first GUI 300 of a control system 100 in the transient mode 230 with respect to the gas flow actuator 24. Figure 4 illustrates a flow chart of a method for controlling the engine system 5 in the transient mode 230 and may be viewed in conjunction with Figure 3 to better explain an embodiment of the invention. The GUI 300 may include operating parameters 320 of the engine 10, which is titled "Engine Basic Monitor" in the GUI 300 shown in Figure 3, and reflects the readings of the plurality of sensors positioned on or around the engine system 5, which are operatively connected to the control system 100. The operating parameters 320 may allow a user to monitor real time operating data of the engine 10. When the engine 10 may be about to go online and receive a load impact, or when the engine 10 may be about to go offline and experience a load de-rate, a user may choose to enable the transient mode 230 in order to avoid surge of the engine 10 and prevent high over speeds or under speeds. To do so, the GUI 300 may be configured via a check box 302 or other like GUI component to allow a user to switch the control system 100 with respect to the gas flow actuator 24 into the transient mode 230, as at 352 in Figure 4.

In the transient mode 230, the control system 100 may be configured to add additional fuel to the engine system 5 for a short duration or remove additional gas from the engine system 5 for a short duration. To do so, the control system 100 may be configured to use the engine measurements and operating parameters 320 to compute a measured power of the engine 10, as at 354 of Figure 4. The measured power may be displayed on the GUI 300, as shown in Figure 3 at 304A, B. The control system 100 may be configured to further calculate the derivative of the measured power 304A, B over time, as at 356 in Figure 4, and as shown at 306A, B in Figure 3. The control system 100 may be configured to compare the derivative 306A, B to a negative rate threshold 308 and a positive rate threshold 312, as at 358 and 364 in Figure 4. The negative rate threshold 308 and the positive rate threshold 312 may be predetermined by a user.

If the derivative 306A, B is greater than the positive rate threshold 308, the control system 100 may be configured to actuate the gas flow actuator 24 to allow additional fuel into the engine system 5. The amount of fuel added to the engine system 5 may be determined by a fast transient fuel add correction map 314, as at 362 in Figure 4. In one embodiment the fast transient fuel add correction map 314 of the GUI 300 may reflect a percentage increase to the final fuel quantity demand. In one embodiment, the percentage increase may be determined at each software run cycle, and multiplied by a fuel divisor add value 322 per the maximum engine cycles allowed 326. Further, the rate the fuel is added may be set by a table Pₘₑₐₛ-Real Q_{gn} Ramp (not shown). If the derivative 306A, B is less than the positive rate threshold 307, the control system 100 may not actuate the gas flow actuator 24 to allow additional fuel into the engine system 5.

If the derivative 306A, B is below the negative rate threshold 312, the control system 100 may be configured to actuate the gas flow actuator 24 to remove additional fuel from the engine system 5. The amount of fuel removed from the engine system 5 may be determined by a fast transient fuel subtract correction map 310, as at 368 in Figure 4. In one embodiment the fast transient fuel subtract correction map 310 of the GUI 300 may reflect a percentage decrease to the final fuel quantity demand. In one embodiment, the percentage decrease may be determined at each software run cycle and multiplied by a variable, which is shown in Figure 3 as a fuel divisor subtract value 324 per the maximum engine cycles allowed 326. Further, the rate the fuel is removed may be set by a Real Qgn Load Rejection Ramp 330. If the derivative 306A, B is above the negative rate threshold 312, the control system 100 may not actuate the gas flow actuator 24 to remove additional fuel into the engine system 5.

In one embodiment, the control system 100 may be connected to a bypass throttle actuator 50 that opens and regulates the bypass throttle valve 48. The control system 100 may be configured to control the bypass throttle actuator 50. In one embodiment, the control system 100 may include a boost transient mode 250 which is configured to control the bypass throttle actuator 50 during transient conditions for an engine system 5. By controlling the bypass throttle actuator 50, and therefore the bypass throttle valve 48, pressure may be maintained on the mixture throttle valve 46. Further, the turbocharger 52, which may be positioned between the engine 10 and the compressor 42, may be prevented from entering a surge area. The boost transient mode 250 may be configured to be used on conjunction with the transient mode 230 used with respect to the gas flow actuator 24.

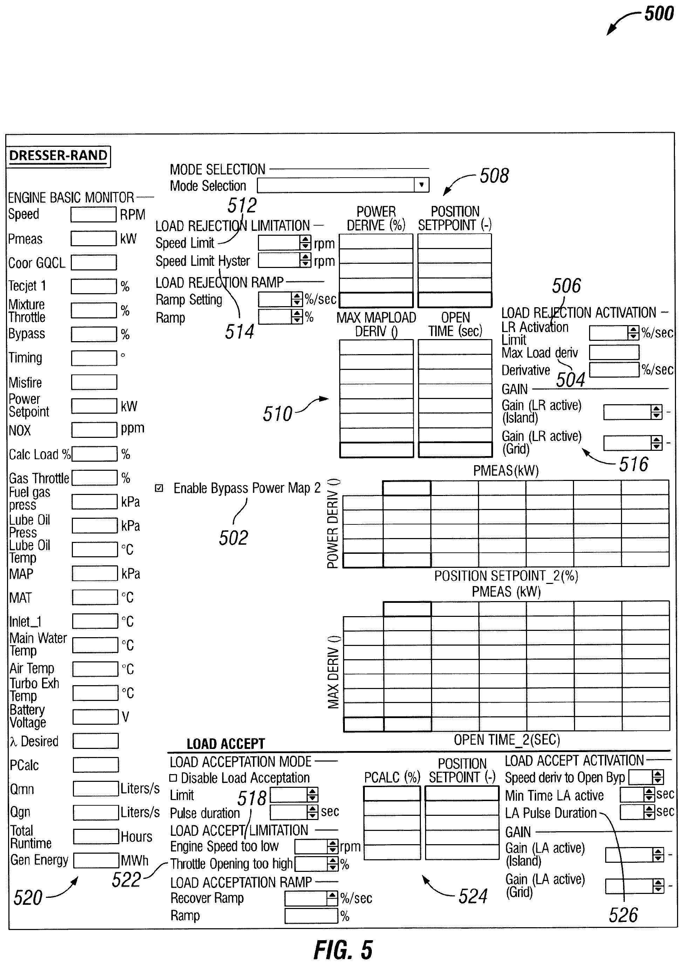

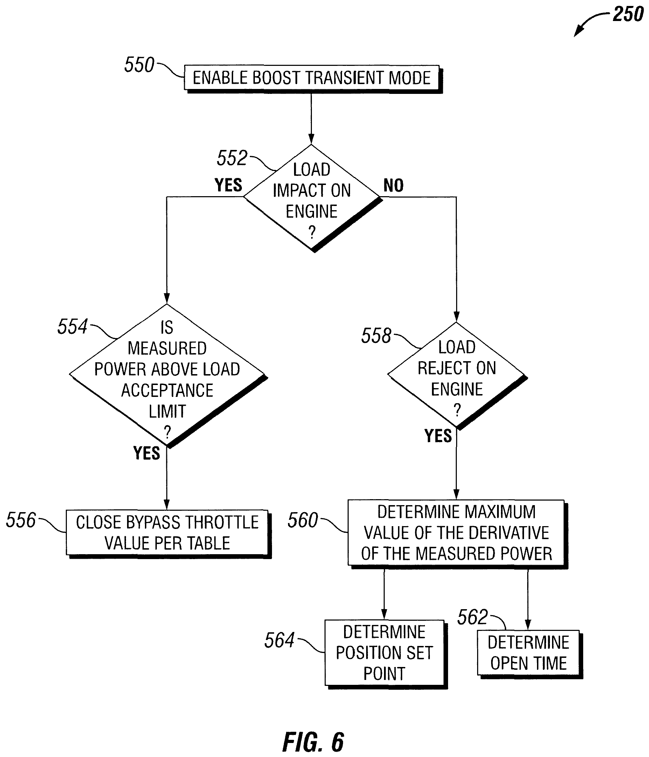

Figure 5 illustrates one example of a second GUI 500 that may be configured to allow a user to place the controller 30 into the boost transient mode 250 with respect to the bypass throttle actuator 50 for the bypass throttle valve 48. Figure 6 illustrating a flow chart for initiating the boost transient mode 250 may be viewed in conjunction with Figure 5 to better understand an embodiment of the invention. The GUI 500 may include a panel of engine 10 measurements and operating parameters 520, which is titled "Engine Basic Monitor" in the GUI 500 shown in Figure 5. When the engine 10 is about to go online and receive a load impact, or when the engine 10 is about to go offline and experience a load de-rate, a user may choose to enable the boost transient mode, as at 550. To do so, the GUI 500 may be configured to allow a user to select an enable button 502 to switch the control system 100 with respect to the bypass throttle actuator 50 into the boost transient mode 250.

When in boost transient mode 250, the control system 100 may be configured to calculate a maximum value of the derivative of the measured power 504, as at 560. The control system 100 may detect a load rejection for the engine 10 if the derivative of the measured power 504 is less than an activation limit 506. If load rejection is detected, the control system 100 may be configured to determine a position set point 508 and an opening time 510 based on the derivative 504. In one embodiment, the control system 100 may be configured to be active only when a speed limit value 512 is greater than a speed limit hysteresis value 514. When the control system 100 is limited in this way, the bypass throttle valve 48 may not be opened if the engine 10 speed is too low. In one embodiment, the control system may multiply a gain value 516 for a normal operation control value in order to allow the normal operation control to reach a new delta pressure set point more quickly.

In one embodiment, the control system 100 may be configured to close the bypass throttle valve 48 on toad impacts or when the speed of the engine 10 may be too low to avoid the engine 10 being under the rated speed. The control system 100 may detect a load acceptance for the engine 10 if the derivative of the measured power 5Q4 is above a load acceptance limit (not shown), or if engine speed is below an engine speed minimum limit 518 and the mixture throttle valve 46 is above a throttle opening maximum limit 522. If the control system 100 detects a load acceptance, the control system 100 may be configured to close the bypass throttle valve 48 via the bypass throttle actuator 50. The control system 100 may be configured to determine the percentage of bypass throttle valve 48 closure by a table 524. The control system 100 may also be configured to determine the maximum duration of the bypass throttle valve 48 closure by a predetermined load accept pulse duration 526.

In one embodiment, it may be desirable for the control system to be configured to open the bypass throttle valve 48 as a speed of the engine 10 begins to recover and the throttle mixture valve 46 has been opened for a minimum load acceptance time 528. When this occurs, a derivative of the engine 10 speed may be above the speed derivative 530 to open the bypass throttle valve 48. In one embodiment, during load accepts of the engine 10, a gain of the normal operation control may be multiplied by a load acceptance grid gain factor 532 and a load acceptance island gain factor 534 in order to reach a desired pressure point sooner. The boost transient mode 250 of the control system 100 may be used alone or in conjunction with any one of the operating modes with respect to the gas flow actuator 24.

The foregoing has outlined features of several embodiments so that those skilled in the art may better understand the present disclosure. Those skilled in the art should appreciate that they may readily use the present disclosure as a basis for designing or modifying other processes and structures for carrying out the same purposes and/or achieving the same advantages of the embodiments introduced herein. Those skilled in the art should also realize that such equivalent constructions do not depart from the spirit and scope of the present disclosure, and that they may make various changes, substitutions and alterations herein without departing from the spirit and scope of the present disclosure.

## Claims

1. A method for delivering a fuel mixture to an engine system, comprising:
connecting a control system to an actuator configured to selectively open a control valve to add fuel to the engine system via a fuel line;
adding fuel into the engine system via the control system at a fuel rate;
mixing the fuel with air to produce a fuel mixture;
measuring a power of an engine of the engine system via the control system;
calculating a derivative of the measured power via the control system;
comparing the derivative of the measured power via the control system;
determining an additional amount of fuel to add if the derivative of the measured power is greater than a positive rate threshold; and
increasing the fuel added to the engine system via the control system based on the determined additional amount of fuel to add.

2. The method of claim 1, further comprising:
determining an amount of fuel to remove from the engine system if the derivative of the measured power is less than a negative rate threshold; and
adding the fuel to the engine system via the control system based on the determined amount of fuel to remove.

3. The method of claim 1, further comprising:
selecting a mode with respect to the control system, wherein the mode of the control system is selected when the engine receives a load impact or a load de-rate.

4. The method of claim 3, wherein a graphical user interface allows a user to select the first mode with respect to the control system.

5. The method of claim 1, where the additional amount of fuel is determined by a fuel add correction map.

6. The method of claim 2, wherein the amount of fuel to be removed is determined by a fuel subtraction correction map.

7. A method for delivering a fuel mixture to an engine system, comprising:
connecting a control system to an actuator configured to selectively open a control valve to add fuel to the engine system via a fuel line;
adding fuel into the engine system via the control system at a fuel rate;
mixing the fuel with air to produce a fuel mixture;
measuring a power of an engine of the engine system via the control system;
calculating a derivative of the measured power via the control system;
comparing the derivative of the measured power with a plurality of thresholds via the control system;
determining an amount of fuel to add or remove from the engine system based on the comparison of the derivative of the measured power with the plurality of thresholds; and
altering the fuel added to the engine system via the control system based on the determined amount of fuel to add or remove.

8. The method of claim 7, wherein the plurality of thresholds includes a positive rate threshold and a negative rate threshold, each of the positive rate threshold and the negative rate threshold being a predetermined value.

9. The method of claim 8, further comprising:
determining an additional amount of fuel to be added if the derivative of the measured power is greater than the positive rate threshold; and
increasing the fuel added into the engine system via the control system based on the determined additional amount of fuel to add.

10. The method of claim 8, further comprising:
determining an amount of fuel to remove from the engine system if the derivative of the measured power is less than the negative rate threshold; and
adding the fuel to the engine system via the control system based on the determined amount of fuel to remove.

11. The method of claim 7, further comprising:
selecting a mode with respect to the control system, wherein the mode of the control system is selected when the engine receives a load impact or a load de-rate.

12. A method for delivering a fuel mixture to an engine, comprising:
combining fuel with air in a mixer to produce the fuel mixture, wherein an actuator regulates a valve to selectively add the fuel into the mixer, and a control system is operatively connected to the actuator to determine the fuel to be added;
determining a modified amount of fuel to be added to or removed from the amount of fuel by the control system, the control system determining the modified amount of fuel by:
measuring a power of the engine,
calculating a derivative of the measured power,
determining a multiplier based on the measured power and the derivative of the measured power, and
calculating the modified amount of fuel by multiplying the amount of fuel by the multiplier;
adding or removing the modified amount of fuel from the amount of fuel for a temporary duration as determined by the control system;
compressing the fuel mixture in a compressor; and
receiving the compressed fuel mixture into the engine.

13. The method of claim 12, further comprising adding the modified amount of fuel to the amount of fuel if the derivative of the measured power is greater than a positive rate threshold.

14. The method of claim 12, further comprising removing the modified amount of fuel if the derivative of the measured power is less than a negative rate threshold.

15. The method of claim 12, further comprising flowing the fuel mixture through a cooler and a mixture throttle valve.

16. The method of claim 15, further comprising selectively flowing the fuel mixture through a bypass valve.

17. The method of claim 16, wherein the bypass valve is at least partially closed when the derivative of the measured power is above a load acceptance limit and the mixture throttle valve is above a predetermined throttle opening value.

18. The method of claim 16, wherein the bypass valve is at least partially opened when the derivative of the measured power is less than a load reject activation limit.

19. The method of claim 16, wherein the control system is operatively connected to a bypass actuator configured to selectively open the bypass valve, and the method further comprises:
calculating a maximum value of a derivative of measured power via the control system;
determining whether the maximum value of the derivative of measured power is less than an activation limit via the control system to determine if load rejection is detected, and if load rejection is detected, determining a position set point and an opening time for the bypass valve; and
adjusting the bypass valve to the position set point for the opening time via the control system if load rejection is detected.

20. The method of claim 19, further comprising:
determining whether the derivative of the measured power is above a load acceptance limit in order to detect a load acceptance of the engine system;
at least partially closing the bypass throttle valve via the control system if load acceptance is detected.
